# EUROPEAN PATENT SPECIFICATION

(11) **EP 3 007 055 B1**
(45) Date of publication and mention of the grant of the patent: **18.07.2018**
(21) Application number: 14188407.2
(22) Date of filing: 10.10.2014
(51) Int. Cl.: B60K 37/06, G06F 3/0482, G06F 3/0488

(54) **Vehicle with a dual operational touch screen device**
Fahrzeug mit einer Berührungsbildschirmvorrichtung mit dualer Betriebsart
Véhicule avec un dispositif à écran tactile opérationnel dual

(43) Date of publication of application: 13.04.2016
(73) Proprietor: Volvo Car Corporation, 40531 Göteborg (SE)
(72) Inventor: Edgren, Claes, 46154 Trollhättan (SE)
(74) Representative: Volvo Car Corporation

(56) References cited:
- EP-A1- 2 779 598
- US-A1- 2006 256 090
- US-A1- 2013 241 720
- US-B1- 8 718 861
- Anonymous: "iKeyboard Concept Makes Touch Typing on iPad Possible", , 11 May 2011 (2011-05-11), XP055157962, Retrieved from the Internet: URL:http://technabob.com/blog/2011/05/11/i keyboard-ipad-keyboard/ [retrieved on 2014-12-11]

## Description

### TECHNICAL FIELD

Example embodiments presented herein are directed towards a vehicle comprising a dual-operational touch screen device as well as corresponding methods.

### BACKGROUND

A vehicle may comprise any number of input devices for receiving a driving related command. Examples of such input devices are a steering wheel and foot pedals. Such input devices are engaged when a vehicle is in a manual driving mode.

An autonomous vehicle is one which is capable of sensing its environment and navigating without the use of human input. It is envisioned that such vehicles will be capable of transitioning from an autonomous driving mode and a manual driving mode, in which a driver manually operates the vehicle. It is further envisioned that such autonomous driving may only be allowed on preapproved or certified roads or zones.

Thus, a vehicle's initial driving segment will likely require the human driver to control the vehicle and later transition to an autonomous driving mode. While in an autonomous driving mode, a driver of a vehicle may engage in activities which may not be possible while the vehicle is in a manual driving mode. Examples of such activities are sleeping, working or using multimedia applications.
European Patent Application No. EP 2 779 598 A1 discloses a method and apparatus for operating an electronic device with a cover. United States Patent Application Publication No. 2013/0241720 A1 discloses a configurable vehicle console.

### SUMMARY

It should be appreciated that while in an autonomous driving mode, a driver of the vehicle may need to enter a driving command. For example, the driver may wish to alter the route the vehicle is driving when in an autonomous mode. Such alterations may include, for example, changing a destination of a route or the speed of the vehicle.

If the user were to provide such a driving command using the steering wheel or foot pedals, it may wrongly be interpreted as the driver wishing to leave the autonomous driving mode. Furthermore, while in an autonomous driving mode, the driver may be far from input devices, such as the steering wheel and foot pedals, if the driver is in a reclined position. Thus, a need exists for providing such an input means that may be used during an autonomous driving mode. The invention is defined by the appended independent claims. Further embodiments are defined by the appended dependent claims.

### BRIEF DESCRIPTION OF THE DRAWINGS

The foregoing will be apparent from the following more particular description of the examples, as illustrated in the accompanying drawings in which like reference characters refer to the same parts throughout the different views. The drawings are not necessarily to scale, emphasis instead being placed upon illustrating the examples.
FIGS. 1A and 1B illustrate a touch screen device and screen cover, respectively, according to some of the examples;
FIG. 2 illustrates a touch screen device comprised in a vehicle, according to some of the examples;
FIGS. 3A and 3B illustrate a working example of the screen cover of FIGS. 1A, 1B and 2, according to some of the examples;
FIGS. 4A and 4B illustrate an alternative example of a screen cover, according to some of the examples;
FIGS. 5A-5C illustrate an example of a predefined area for user input, according to some of the examples;
FIG. 6 illustrates a working example of the screen cover of FIGS. 4A, 4B, and 5A-5C, according to some of the examples; and
FIGS. 7A and 7B illustrate a further alternative example of a screen cover, according to some of the examples.

### DETAILED DESCRIPTION

In the following description, for purposes of explanation and not limitation, specific details are set forth, such as particular components, elements, techniques, etc. in order to provide a thorough understanding of the example embodiments. However, it will be apparent to one skilled in the art that the example embodiments may be practiced in other manners that depart from these specific details. In other instances, detailed descriptions of well-known methods and elements are omitted so as not to obscure the description of the example embodiments.

The terminology used herein is for the purpose of describing the example embodiments and is not intended to limit the embodiments presented herein. The example embodiments presented herein are described with the use of a vehicle in the form of an automobile. It should be appreciated that the example embodiments presented herein may be applied to any form of vehicle or means of transportation comprising, for example, cars, trucks, busses and construction equipment, as well as air-planes, boats, ships, and space craft.

Autonomous driving allows an occupant of a vehicle, particularly a driver, to engage in activities that would otherwise not be possible while a vehicle is in a manual driving mode. It should be appreciated that while in an autonomous driving mode, a driver of the vehicle may need to enter a driving command. For example, the driver may wish to alter the route the vehicle is driving when in an autonomous mode. Such alterations may include, for example, changing a destination of a route or the speed of the vehicle.

If the user were to provide such a driving command using the steering wheel or foot pedals, it may wrongly be interpreted as the driver wishing to leave the autonomous driving mode. Furthermore, while in an autonomous driving mode, the driver may be far from input devices, such as the steering wheel and foot pedals, if the driver is in a reclined position. Thus, a need exists for providing such an input means that may be used during an autonomous driving mode. Therefore, at least one example object of some of the example embodiments presented herein is to provide an alternative input means for a vehicle.

It should be appreciated that such an alternative input means may be used during a manual driving mode as well. For example, if a passenger wishes to override a driving command provided by the driver, such an alternate input means may be used. An example scenario when such an alternative input means during a manual driving mode will be used is if a student driver is utilizing a steering wheel and foot pedals, a driving instructor may use the alternate input means to override any driving inputs that the student driver may erroneously apply.

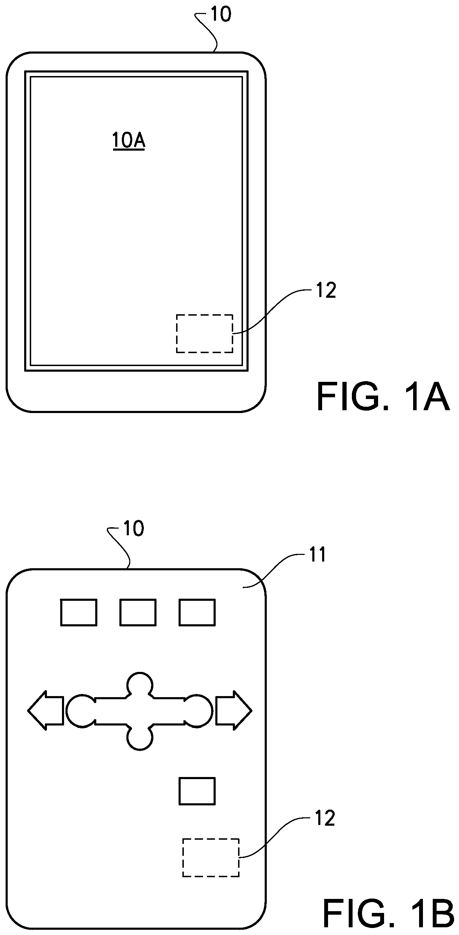

**Figure 1A** illustrates a touch screen device 10, according to some of the example embodiments. The touch screen device 10 comprises a display screen 10A in which a user may interact with in order to provide input commands. The touch screen device 10 may further comprise a control unit 12 for providing operational functionality to the touch screen device. The control unit 12 may be any suitable type of computation unit, for example, a microprocessor, digital signal processor (DSP), field programmable gate array (FPGA), or application specific integrated circuit (ASIC), or any other form of circuitry.

The touch screen device 10 may be a standard touch screen device used for multimedia purposes such as gaming, watching multimedia videos, listening to multimedia files, surfing the internet, document processing, etc. A non-limiting example of such a touch screen device may be an iPad®. Using the touch screen device for multimedia purposes is herein referred to as a first operational state.

The touch screen device 10 may also be used for a second operational state related to a vehicle driving functionality. According to some of the example embodiments, the vehicle driving functionality comprises a driving command, route selection, and/or a vehicle related setting. The driving command may be, for example, related to a speed or the vehicle, changing lanes in a road or making a detour with respect to a current route. A vehicle related setting may be related to any controls associated with the vehicle itself, for example, controlling a volume in the vehicle, air conditioning settings, door, trunk, and/or window locking mechanisms. A vehicle related setting may even comprise settings outside of the vehicle, for example, controlling the opening and closing of a garage door.

**Figure 1B** illustrates the touch screen device 10 of Figure 1A with a screen cover 11 overlaid on the device. According to some of the examples, the screen cover 11 may be used to switch an operational state of the touch screen device 10 from the first to second operational state, and vice versa. According to some of the examples, the control unit 12 that is configured to detect a configuration of the screen cover 11. For example, once the control unit 12 detects that the screen cover 11 is overlaid on the touch screen device 10 or display screen 10A, as illustrated in Figure 1B, the control unit 12 will switch the operational state of the touch screen device from the first operational state to the second operational state. Once in the second operational state, a user will be able to input commands related to a vehicle driving functionality.

According to some of the examples, the control unit 12 will be able to detect once the screen cover 11 is in an overlaid position via a magnetic detection. For example, the screen cover 11 may comprise any number of embedded magnets. Thus, once the screen cover 11 is in an overlaid position, any number of sensors may be configured to detect the magnetic field caused by the screen cover being in the overlaid position. The detection of the magnetic field will signal to the control unit 12 that the screen cover 11 is in the overlaid position.

According to some of the examples, the control unit 12 will be able to detect once the screen cover 11 is in an overlaid position via a light or camera sensor. For example, a light sensor or camera may be configured to detect a reduction of light caused by the screen cover 11 being in an overlaid position. The detection of the reduction of light will signal to the control unit 12 that the screen cover 11 is in the overlaid position.

According to some of the examples, the control unit 12 will be able to detect the screen cover 11 being in the overlaid position via a manual input provided by a user. For example, the user may provide an input, which may be touch or voice activated, which will signal to the control unit 12 that the screen cover 11 is in the overlaid position.

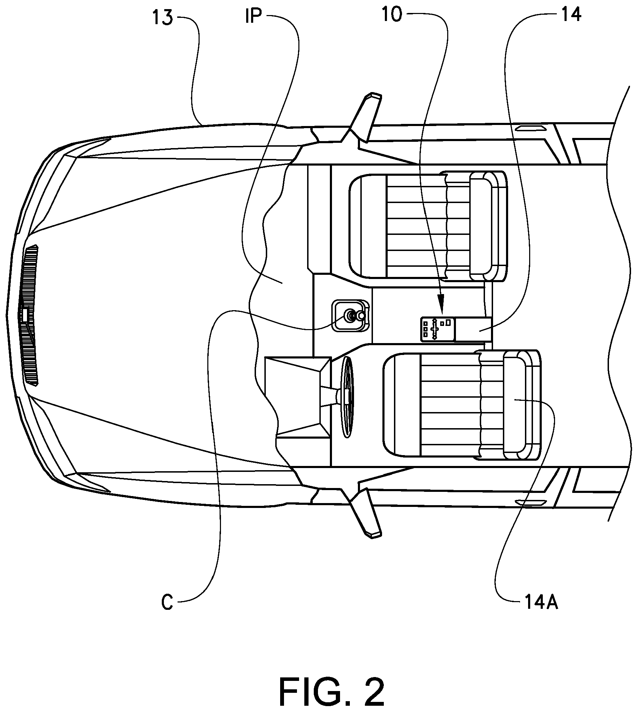

**Figure 2** illustrates the touch screen device 10 of Figures 1A and 1B in a vehicle 13. In the example provided by Figure 2, the touch screen device 10 is located in an armrest 14 of a front seat 14A. It should be appreciated that the device location depicted in Figure 2 is merely an example. An example advantage of having the touch screen device 10 located in the armrest 14 is that the device will always be within reach of the occupant of the front seat 14A, even is the front seat is in a retracted or reclined position.

According to some of the examples, the touch screen device may be located within the instrument panel IP or center console C of the vehicle 13. According to some of the example embodiments, the touch screen device 10 may be in a permanently fixed location or may be detachable. In example embodiments where the touch screen device 10 is detachable, the device may be configured to attach to a docketing station anywhere within the vehicle. In such example embodiments, the control unit 12 may be configured to detect the attachment to the docket station via a voltage or current reading resulting from the touch screen device 10 being docketed. An example advantage of the touch screen device being docketed is that the same touch screen device may be utilized for any number of vehicles.

It should be appreciated that the touch screen device 10 may be configured to operate wirelessly throughout the vehicle, regardless of whether or not the device is attached to a docketing station. An example advantage of having the touch screen device being able to operate wirelessly is that any occupant in the vehicle may utilize the touch screen device 10 regardless of where the occupant is situated in the vehicle.

According to some of the examples, the control unit 12 may be configured to detect that the touch screen device 10 is inside or in close proximity to the vehicle. According to some of the examples, the touch screen device 10 will be configured to switch to the second operational state, related to a vehicle driving functionality, once the screen cover 11 is overlaid on the device 10 and once the control unit 12 has detected that the touch screen device 10 is within or in close proximity to the vehicle. Thus, the detection of the device 10 being within or in close proximity to the vehicle may serve as a second confirmation, with the overlaid screen cover 11 being the first confirmation, for switching the operational state of the touch screen device to the second operational state.

It should be appreciated that the control unit 12 may also be configured to detect where inside the vehicle the touch screen device 10 is located. Based on the detected location within the vehicle, the control unit 12 may alter the type of driving commands that may be input into the device.

For example, if the control unit detects the touch screen device as being located in the front of the vehicle, where the driver is situated, the control unit will allow driving commands that may alter a current route of the vehicle. Similarly, if the control unit detects the touch screen device as being located in the rear of the vehicle, where the passengers are situated, the control unit may not allow driving commands that alter the current route of the vehicle.

According to some of the example embodiments, the control unit 12 is configured to switch the operational state of the touch screen device 10 to the second operational state once the vehicle is in an autonomous driving mode. Thus, the car being in an autonomous mode may serve as a second confirmation for switching the operational state of the touch screen device to the second operational state. Likewise, the control unit 12 may be configured to switch the operational state of the touch screen device 10 to the first operational state, related to a multimedia usage, once an immediate end of the autonomous driving mode is expected.

An example advantage of using the second operational mode during an autonomous driving mode is that the user or occupant may provide driving commands to the vehicle without exiting the autonomous driving mode. However, it should be appreciated that the second operational state of the touch screen device 10 need not be limited to use in an autonomous driving mode. Thus, according to some of the example embodiments, the second operational mode may be used in both an autonomous and manual driving mode.

It should be appreciated that the second operational state may be used solely in a manual driving mode, solely in an autonomous driving mode, or in both a manual or autonomous driving mode. The conditions in which the second operational driving mode will be functional may be user programmable and adjustable.

It should be appreciated that such alternative driver input may be used also be used during a semi-automated drive, in which the vehicle supports the driver with a control over some or all parts of the vehicle movement. In semi-automated mode, the driver is still expected to monitor the vehicle movement and has the responsibility to take over the control if and when needed. Such semi-automated drive function may be lane keeping, speed and distance keeping to vehicles in front of the vehicle and parking assistance. A semi-automated driving mode may also be applied for an otherwise autonomous vehicle when external conditions do not allow for a full automation. For example, the current road is not certified for autonomous drive, weather or light conditions affect the operation of the autonomous drive system, or requirements set by the authorities, insurance companies, etc. do not allow for a full automation. Thus, the second operational driving mode may be functional when the vehicle is in a semi-automated drive.

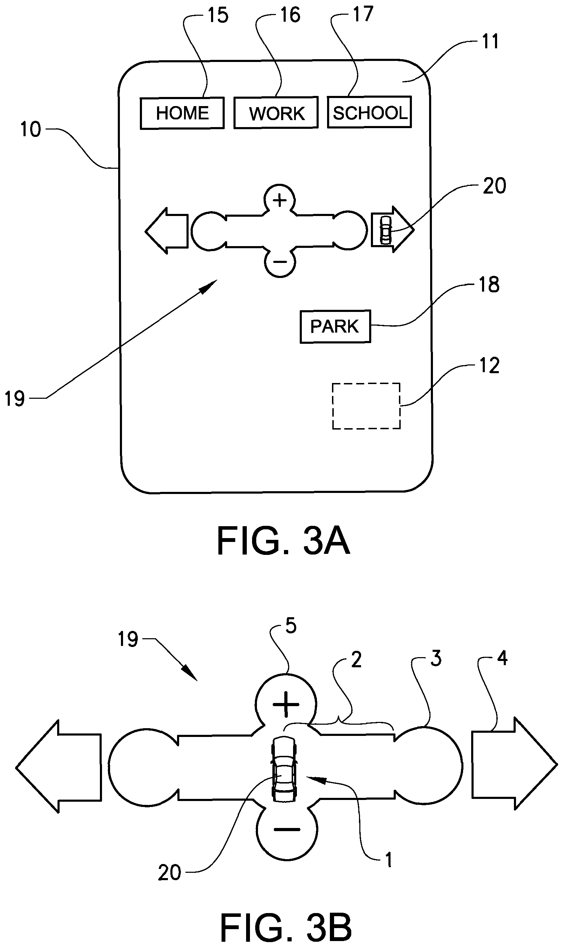

**Figure 3A** illustrates a detailed example of the touch screen device 10 and screen cover 11 illustrated in Figures 1A, 1B and 2. The screen cover 11 comprises a number of predefined areas in which a user may enter an input related to a vehicle driving functionality. As illustrated in Figure 3A, each predefined area 15, 16 or 17 related to a destination option comprises a visual marker corresponding to the text of the location. For example, the screen cover 11 comprises a number of destination options such as home 15, work 16 and school 17. By pressing one of these options, the user may choose a route or may alter a previously planned of the vehicle. It should be appreciated that such alteration of the route may be performed in either an autonomous or manual driving mode of the vehicle.

Such destination options may be preprogrammed, based on a driving history, etc. It should be appreciated that an occupant or driver of the vehicle may have a profile in which preferred settings or locations are stored. In selecting one of the destination options, the user may press on of the predefined areas 15, 16 or 17. The control unit 12 may be configured to confirm an input corresponding to one of the destination options by measuring for example, a location, time duration and/or pressure of a user touching the predefined area corresponding to options 15, 16 and 17.

The screen cover 11 may further comprise an indication area 18 for indicating a current route of the vehicle. In the example provided by Figure 3A, the indication area 18 is provided with a visual marker in the form of text for indicating the current route. The screen cover 11 may further comprise any number of driving input options 19 for receiving a vehicle driving functionality input in the form of a driving command. The screen cover 11 may further comprise a vehicle icon 20 for indicating to the user what command has been entered or a current state of the vehicle. Furthermore, the screen cover 11 may also comprise shading 21 to indicate an executed or soon to be executed command.

**Figure 3B** illustrates a working example of the driving input options 19 of the screen cover 11 of Figure 3A. According to some of the example embodiments, an icon of a vehicle 20 may initially be located within a center region 1 of the driving input area 19. The control unit 12 may be configured to detect that a user is attempting to enter a driving command based on, for example, a time and/or pressure applied to a certain location 1 within the driving input area. In the example provided in Figure 3B the starting location for entering a driving command is the center region 1 in which the vehicle icon 20 is located.

If the user wishes for the vehicle to move to the left or right, the user may apply pressure to the vehicle icon 20 and drag the icon towards the left or right respectively. In the example provided by Figure 3B, if the user wishes to move the vehicle in a driving line slightly to the right, for example to view the road ahead, the user may select, apply pressure to and drag the vehicle icon 20 to the right. If the user wishes to change lines towards the right, the user may continue to drag the vehicle icon 20 until it feels a bump, ridge, or any other tactile marker along an elongated region 2 of the driving input area 19. It should be appreciated that in addition to or instead of the tactile marker, a visual marker, for example the circular region 3, may be utilized to provide an indication to the user of how far the vehicle 19 shall be dragged in order to enter the command of switching lanes.

If the user wishes to enter a driving command for the vehicle to turn right or left, the user may move the vehicle icon 20 to the right or left arrow, respectively. In the example provided by Figure 3B, if the user wishes to turn right, the user shall drag the vehicle icon 20 to the right arrow 4 or simply tap the right arrow 4. It should be appreciated that the control unit 12 may provide the user with an indication of the driving command which has been input by providing a shading or highlighting over the predefined area related to the driving command. An example advantage of providing such a shading or highlighting is that a user may become aware of the driving command which the control unit 12 has received. Thus, if the driving command has been entered by error, the user may correct the entered command in due time.

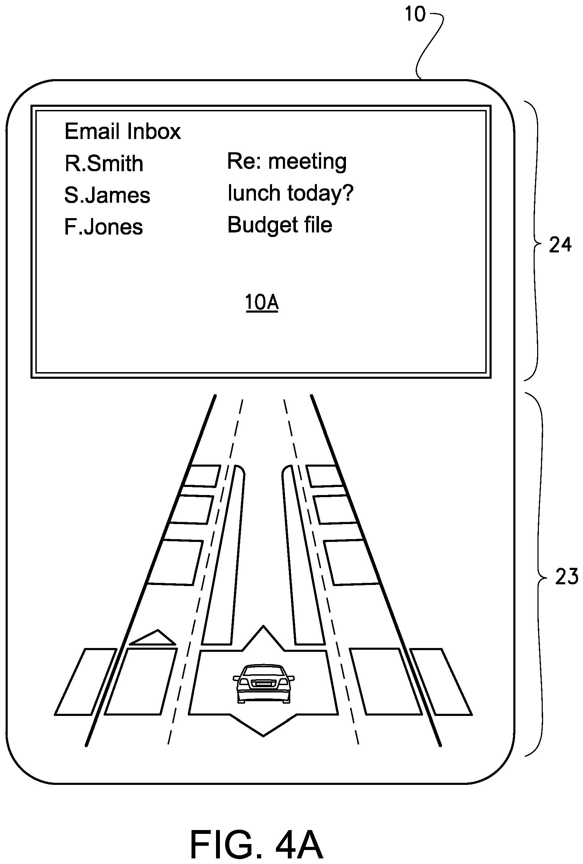

**Figure 4A** illustrates an alternative screen cover 23 for the touch screen device 10. The screen cover 23 covers only a portion of the touch screen device 10. Thus, an uncovered portion 24 of the touch screen device 10 remains after the screen cover 23 is overlaid. Within the uncovered portion 24, the display screen 10A remains visible and may be configured for user interaction. The uncovered potion 24 may be utilized for multimedia purposes even after the control unit 12 has switched the touch screen device 10 to the second operational state. Thus, once the control unit 12 has switched to the second operational state, both the first and second operational states may function simultaneously.

In the example provided by Figure 4A, a user's email inbox is still functional with in the uncovered portion 24. Thus, the uncovered portion of the screen cover 11 is configured to function in the first operational state. Meanwhile, the overlaid portion of the screen cover 23 comprises a number of predefined areas configured to a user input related to a vehicle driving functionality. Thus, the overlaid portion of the screen cover 23 is configured to operate in the second operational state.

An example advantage of the screen cover 23 of Figure 4A is that a user may still have access to the multimedia functionality of the first operational state even after the control unit 12 has switched the operational mode of the touch screen device 10 to the second operational state.

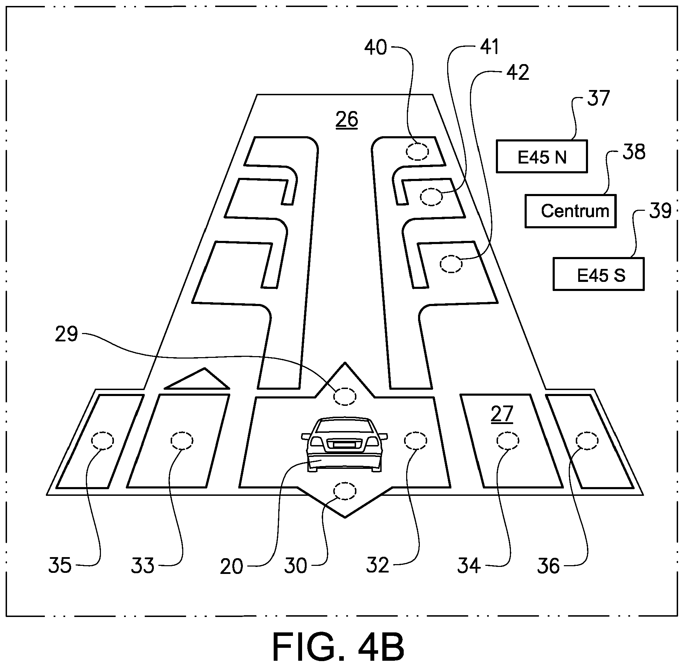

**Figure 4B** is a detailed depiction of the screen cover 23 of Figure 4A. The screen cover 23 may comprise opaque regions 25 and transparent or semi-transparent regions 26. The screen cover 23 may further comprise cut-out regions 27 defining predefined areas for accepting a user input related to a vehicle driving functionality.

It should be appreciated that the screen cover 23 of Figure 4B is merely an example. According to some of the examples, the screen cover may be entirely transparent or semi-transparent. In such an embodiment, the predefined areas may be provided with the use of visual markers. According to some of the examples, the predefined areas need not be cut-out regions but may be transparent or semi-transparent regions. According to some of the examples, the predefined areas may be areas which comprise a thinner material as compared to the rest of the screen cover.

In the example provided by Figure 4B, a vehicle icon 20 is provided to indicate the starting location 28 for user input on the screen cover. If a user wants to increase or decrease the speed of the vehicle, the user may apply pressure to the vehicle icon 20 and drag the icon towards the upper arrow 29 or lower arrow 30, respectively. If a user wishes to change the position of the vehicle from left to right within a driving lane, the user may drag the vehicle icon 20 to a left position 31 or a right position 32, respectively, within the starting location 28.

If a user wishes to change driving lanes to an adjacent driving lane on the left-hand or right-hand side, the user may drag the vehicle icon 20 to the left-hand 33 or right-hand 34, respectively, predefined area designated for a lane changing functionality. If the user wishes to stop or park the vehicle within a left-hand or right-hand resting stop, the user may drag the vehicle icon 20 to a left-hand 35 or right-hand 36, respectively, predefined area designated for a parking functionality.

The screen cover 23 may also comprise any number of text boxes, for example, boxes 37, 38, and 39 which may indicate upcoming exits which may be taken by the vehicle. Should the user wish to take one of the indicated exits, the user may drag the vehicle icon 10 to a corresponding predefined area 40, 41 and 42 in order to take the exit indicated by text box 37, 38 and 39, respectively.

According to some of the examples, the text boxes 37, 38, or 39 may also comprise the name of route destinations, which may be provided based on a driving history or preprogrammed by the user. Thus, the user may choose a route or alter a previously designated route by dragging the vehicle icon 20 to a predefined area 40, 41, or 42 corresponding to a respective text box 37, 38, or 39.

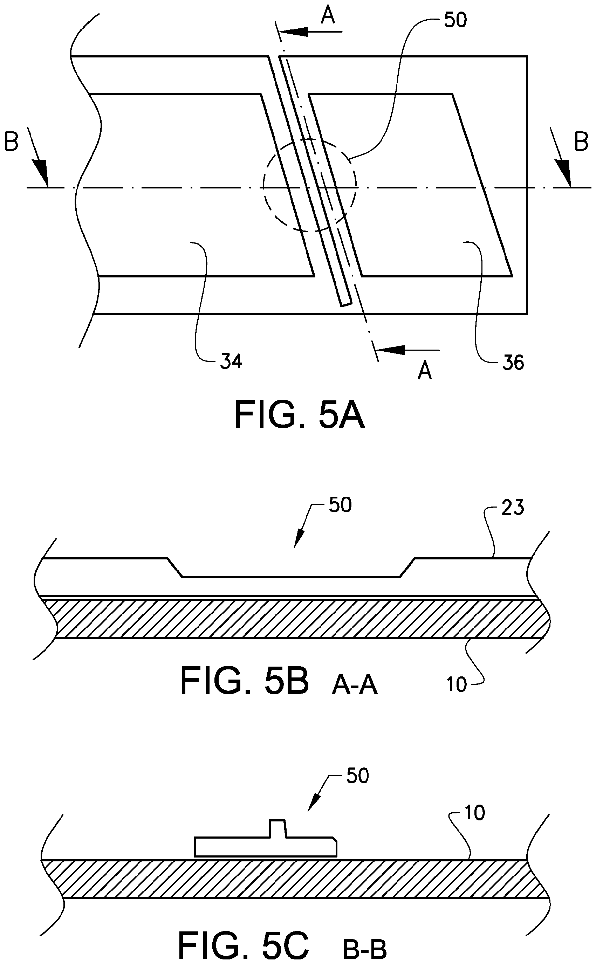

**Figure 5A** illustrates a close-up view of predefined areas 34 and 36 with cross-sections A-A and B-B defined. Cross-section A-A runs vertically along a space defined between the predefined regions 34 and 36. Cross-section B-B runs horizontally along the two predefined regions 34 and 36. A circle 50 represents the center region of the cross-sections A-A and B-B.

**Figure 5B** illustrates the cross-section A-A of the screen cover 23 with respect to the touch screen device 10. In Figure 5B, the center region 50 of the cross-sections features an indented portion of the screen cover 23. This indented portion is used as a tactile marker for guiding the user in providing the driving command. The indented portion provides a defined track for the user moving his or her finger from predefined area 34 to predefined area 36 when positioning the vehicle icon 20.

**Figure 5C** illustrates the cross-section B-B of the screen cover 23 with respect to the touch screen device 10. In Figure 5C, the center region 50 of the cross-sections features a raised portion of the screen cover 23. This raised portion is used as a tactile marker for guiding the user in providing the driving command. The raised portion provides a defined track for the user moving his or her finger upward from predefined area 34 to any of the predefined areas 40, 41, or 42 when positioning the vehicle icon 20.

An example advantage of providing such tactile markers, for example, as discussed in Figures 5A-5C, is to reduce the probability of the user providing an incorrect input. It should be appreciated that such tactile markers may be used for any number of predefined areas in order to provide a user guidance in selecting the various driving command options.

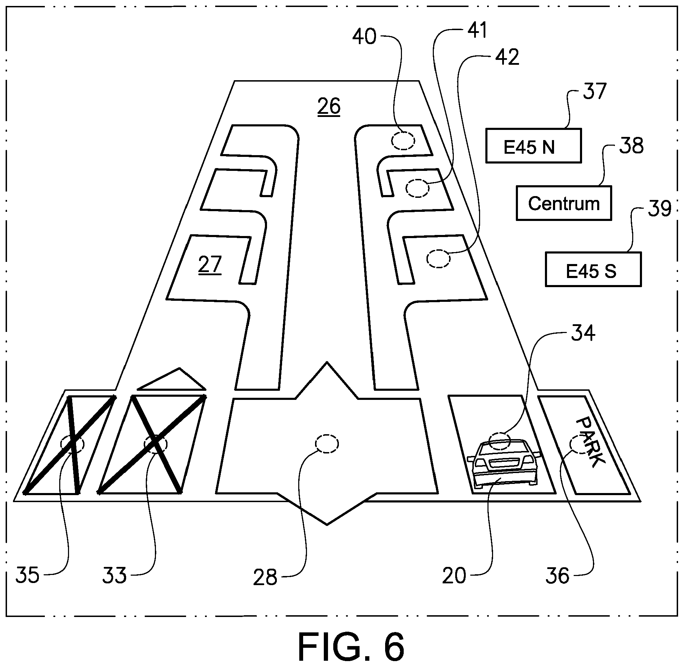

**Figure 6** illustrates a working example of the screen cover 23 of Figures 4A, 4B and 5A-5C. In the example provided in Figure 6, due to the current position of the vehicle it is not possible to change lanes to a left adjacent lane nor is it possible to rest or park the vehicle in a left-hand side resting stop. Thus, the predefined areas 33 and 35 are highlighted with an X to indicate to the user that the corresponding driving command are currently unavailable.

In the example provided by Figure 6, the user has dragged the vehicle icon 20 to the predefined area 34 corresponding to a driving command of switching lanes to an adjacent right lane. The driving command input is verified by the vehicle icon being situated in the predefined area 34. Once the driving command is completed, the vehicle icon 20 may return to the central starting position 28.

In the example provided by Figure 6, the driving commands which are available are highlighted with the appropriate text box and/or the corresponding predefined area is not marked with an X. According to the example provided by Figure 6, the vehicle may park or rest in a right-hand resting stop, as indicated by the text box 36. The vehicle may also take the exits indicated by text boxes 37, 38, and 39.

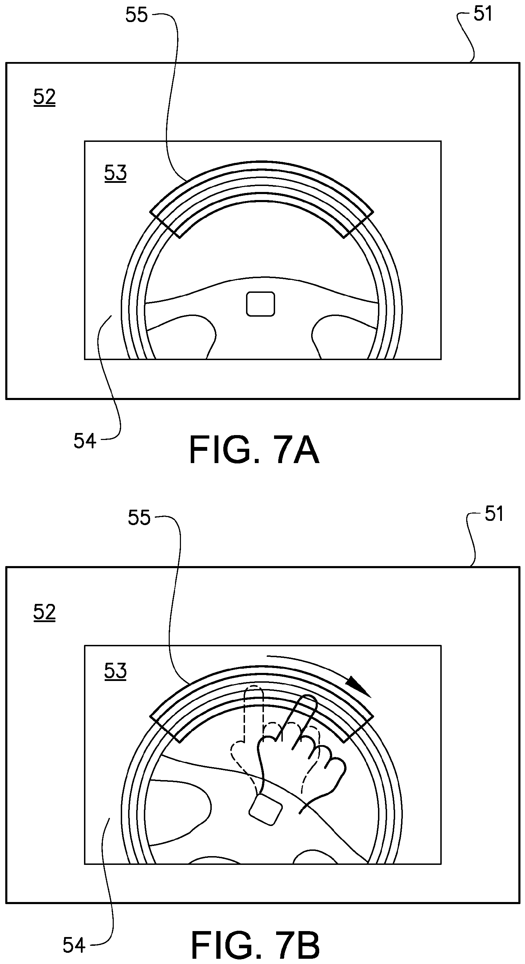

**Figure 7A** illustrates yet another example of a screen cover 51 for the touch screen device 10. The screen cover 51 of Figure 7A comprises an opaque section 52 as well as a transparent or semi-transparent section 53 comprising visual markers. In the example of Figure 7A, the visual marker is in the form of a steering wheel 54. The topmost portion of the steering wheel marker comprises a predefined area 55 for receiving a vehicle driving functionality input. The predefined area 55 may be distinguishable by visual and/or tactile markers.

**Figure 7B** illustrates a working example of the screen cover 51 of Figure 7A. In the example provided by Figure 7B, a user may move their hand along the predefined area 55 in order to provide a driving command to turn the vehicle left or right, depending on the whether the hand movement is to the left of the right.

It should be appreciated that the screen covers discussed herein are merely examples. It should further be appreciated that the screen covers may be interchangeable and a single touch screen device may be configured to operate with any number of screen covers. Specifically, the touch screen device 10 may be configured to operate with any number of screen covers. An example advantage of the touch screen device being configured for use with multiple screen covers is that different user's may have different preferences, thus the screen cover may be user specific.

For example, an advanced user may utilize a screen cover with many options for entering driving commands, for example, the screen cover of Figure 4B. Alternatively, a less advanced user may use a simpler screen cover with lesser options, for example, the screen cover of Figure 7A. It should be appreciated that the control unit 12 may not only be able to detect the presence of the screen cover overlaid on the display screen, but the control unit 12 may also detect which screen cover is overlaid if the touch screen device is configured to use different types of screen covers.

It should further be appreciated that herein an example user selection has been discussed with respect to a user dragging a vehicle icon to a desired location. It should be appreciated that a user may also tap the vehicle icon and then subsequently tap the desired location of the vehicle icon. In such example embodiments, the control unit 12 may verify the intended driving command, for example, by measuring a pressure and duration of the tap and subsequent tap. The tapping method, as well as any other user interaction with the touch screen, may be used in conjunction with any of the example embodiments presented herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these examples. Accordingly, although specific terms are employed, they are used in a generic and descriptive sense only and not for purposes of limitation, the scope of the embodiments being defined by the following claims.

## Claims

1. A vehicle **(13)** comprising a dual operational touch screen device **(10)**, the touch screen device comprising:
a display screen **(10A)**;
a control unit **(12)** configured to switch an operational state of the touch screen device from a first operational mode related to a multimedia usage of the touch screen device to a second operational mode related to a vehicle driving functionality, **characterised in that** the touch screen device (10) is further comprising a screen cover (11, 23, 51) configured to cover at least a portion of the display screen (10A), wherein the screen cover comprises at least one predefined area for receiving a user input,
wherein the control unit (12) is further configured to initiate a command of the vehicle driving functionality based on the user input received via the at least one predefined area of the screen cover,
wherein the at least one predefined area comprises at least one cut-out region **(27)**, wherein the control unit (12) of the touch screen device (10) is configured to switch the operational state of the touch screen device from the first operational mode to the second operational mode, when the screen cover is positioned over the display screen and the vehicle **(13)** is in an autonomous driving mode or a semi-automated driving mode.

2. The vehicle **(13)** of claim 1, wherein the vehicle driving functionality comprises a driving command, route selection, and/or a vehicle related setting.

3. The vehicle **(13)** of any of claims 1-2, wherein the at least one predefined area comprises visual and/or tactile markers defining different possible user inputs.

4. The vehicle **(13)** of any of claims 1-3, wherein the screen cover comprises, at least in part, a transparent or semi-transparent material.

5. The vehicle **(13)** of anyone of claims 1-4, wherein the touch screen device **(10)** is located in an instrument panel, center console, or a front seat of the vehicle **(13).**

6. The vehicle **(13)** of any of claims 1-5, wherein the touch screen device **(10)** is configured to attach to the vehicle **(13)** via a docketing port.

7. The vehicle **(13)** of any of claims 1-6, wherein the touch screen device **(10)** is configured to operate wirelessly within the vehicle **(13).**

8. A method for providing a touch screen device in a vehicle **(13)**, wherein the touch screen device comprises a display screen and a screen cover configured to cover at least a portion of the display screen, wherein the screen cover comprises at least one predefined area for receiving a user input, wherein the at least one predefined area comprises a cut-out region, the method comprising:
switching an operational state of the touch screen device from a first operational mode related to a multimedia usage of the touch screen device to a second operational mode related to a vehicle driving functionality, wherein the control unit (12) of the touch screen device (10) is configured to switch the operational state of the touch screen device from the first operational mode to the second operational mode, when the screen cover is positioned over the display screen and the vehicle **(13)** is in an autonomous driving mode or a semi-automated driving mode; and
initiating a command of the vehicle driving functionality based on the user input received via the at least one predefined area of the screen cover.

9. The method of claim 8, wherein the vehicle driving functionality comprises a driving command, route selection, and/or a vehicle related setting.

10. A computer readable medium comprising program instructions for providing a touch screen device in a vehicle **(13)**, wherein the touch screen device comprises a display screen and a screen cover configured to cover at least a portion of the display screen, wherein the screen cover comprises at least one predefined area for receiving a user input, wherein the at least one predefined area comprises a cut-out region, wherein execution of the program instructions by one or more processors of a computer system causes the one or more processors to carry out the steps of:
switching an operational state of the touch screen device from a first operational mode related to a multimedia usage of the touch screen device to a second operational mode related to a vehicle driving functionality, wherein the control unit (12) of the touch screen device (10) is configured to switch the operational state of the touch screen device from the first operational mode to the second operational mode, when the screen cover is positioned over the display screen and the vehicle **(13)** is in an autonomous driving mode or a semi-automated driving mode; and
initiating a command of the vehicle driving functionality based on the user input received via the at least one predefined area of the screen cover.

11. The computer readable medium of claim 10, wherein the vehicle driving functionality comprises a driving command, route selection, and/or a vehicle related setting.

## Patentansprüche

1. Fahrzeug (13), welches eine Berührungsbildschirmvorrichtung (10) mit zwei Betriebsarten umfasst, wobei die Berührungsbildschirmvorrichtung umfasst:
einen Anzeigebildschirm (10A);
eine Steuereinheit (12), die dafür ausgelegt ist, einen Betriebszustand der Berührungsbildschirmvorrichtung von einem ersten Betriebszustand, der mit einer Multimedianutzung der Berührungsbildschirmvorrichtung im Zusammenhang steht, zu einem zweiten Betriebszustand, der mit einer Fahrfunktionalität des Fahrzeugs im Zusammenhang steht, umzuschalten, **dadurch gekennzeichnet, dass** die Berührungsbildschirmvorrichtung (10) ferner eine Bildschirmabdeckung (11, 23, 51) umfasst, die dafür ausgelegt ist, wenigstens einen Abschnitt des Anzeigebildschirms (10A) abzudecken, wobei die Bildschirmabdeckung wenigstens eine vordefinierte Fläche zum Empfangen einer Benutzereingabe umfasst, wobei die Steuereinheit (12) ferner dafür ausgelegt ist, einen Befehl der Fahrfunktionalität des Fahrzeugs basierend auf der Benutzereingabe auszulösen, die über die wenigstens eine vordefinierte Fläche der Bildschirmabdeckung empfangen wird,
wobei die wenigstens eine vordefinierte Fläche wenigstens einen ausgeschnittenen Bereich (27) umfasst, wobei die Steuereinheit (12) der Berührungsbildschirmvorrichtung (10) dafür ausgelegt ist, den Betriebszustand der Berührungsbildschirmvorrichtung vom ersten Betriebszustand zum zweiten Betriebszustand umzuschalten, wenn die Bildschirmabdeckung über dem Anzeigebildschirm positioniert ist und das Fahrzeug (13) sich in einem autonomen Fahrmodus oder einem halbautomatischen Fahrmodus befindet.

2. Fahrzeug (13) nach Anspruch 1, wobei die Fahrfunktionalität des Fahrzeugs einen Fahrbefehl, eine Routenauswahl und/oder eine das Fahrzeug betreffende Einstellung umfasst.

3. Fahrzeug (13) nach einem der Ansprüche 1-2, wobei die wenigstens eine vordefinierte Fläche visuelle und/oder taktile Markierungen umfasst, die verschiedene mögliche Benutzereingaben definieren.

4. Fahrzeug (13) nach einem der Ansprüche 1-3, wobei die Bildschirmabdeckung wenigstens zum Teil ein durchsichtiges oder halbdurchsichtiges Material umfasst.

5. Fahrzeug (13) nach einem der Ansprüche 1-4, wobei die Berührungsbildschirmvorrichtung (10) in einem Armaturenbrett, einer Mittelkonsole oder einem Vordersitz des Fahrzeugs (13) angeordnet ist.

6. Fahrzeug (13) nach einem der Ansprüche 1-5, wobei die Berührungsbildschirmvorrichtung (10) dafür ausgelegt ist, über einen Docking-Anschluss am Fahrzeug (13) befestigt zu werden.

7. Fahrzeug (13) nach einem der Ansprüche 1-6, wobei die Berührungsbildschirmvorrichtung (10) dafür ausgelegt ist, innerhalb des Fahrzeugs (13) drahtlos betrieben zu werden.

8. Verfahren zum Bereitstellen einer Berührungsbildschirmvorrichtung in einem Fahrzeug (13), wobei die Berührungsbildschirmvorrichtung einen Anzeigebildschirm und eine Bildschirmabdeckung, die dafür ausgelegt ist, wenigstens einen Abschnitt des Anzeigebildschirms abzudecken, umfasst, wobei die Bildschirmabdeckung wenigstens eine vordefinierte Fläche zum Empfangen einer Benutzereingabe umfasst, wobei die wenigstens eine vordefinierte Fläche einen ausgeschnittenen Bereich umfasst, wobei das Verfahren umfasst:
Umschalten eines Betriebszustands der Berührungsbildschirmvorrichtung von einem ersten Betriebszustand, der mit einer Multimedianutzung der Berührungsbildschirmvorrichtung im Zusammenhang steht, zu einem zweiten Betriebszustand, der mit einer Fahrfunktionalität des Fahrzeugs im Zusammenhang steht, wobei die Steuereinheit (12) der Berührungsbildschirmvorrichtung (10) dafür ausgelegt ist, den Betriebszustand der Berührungsbildschirmvorrichtung vom ersten Betriebszustand zum zweiten Betriebszustand umzuschalten, wobei die Bildschirmabdeckung über dem Anzeigebildschirm positioniert ist und das Fahrzeug (13) sich in einem autonomen Fahrmodus oder einem halbautomatischen Fahrmodus befindet; und
Auslösen eines Befehls der Fahrfunktionalität des Fahrzeugs basierend auf der Benutzereingabe, die über die wenigstens eine vordefinierte Fläche der Bildschirmabdeckung empfangen wird.

9. Verfahren nach Anspruch 8, wobei die Fahrfunktionalität des Fahrzeugs einen Fahrbefehl, eine Routenauswahl und/oder eine das Fahrzeug betreffende Einstellung umfasst.

10. Computerlesbares Medium, welches Programmanweisungen zum Bereitstellen einer Berührungsbildschirmvorrichtung in einem Fahrzeug (13) umfasst, wobei die Berührungsbildschirmvorrichtung einen Anzeigebildschirm und eine Bildschirmabdeckung, die dafür ausgelegt ist, wenigstens einen Abschnitt des Anzeigebildschirms abzudecken, umfasst, wobei die Bildschirmabdeckung wenigstens eine vordefinierte Fläche zum Empfangen einer Benutzereingabe umfasst, wobei die wenigstens eine vordefinierte Fläche einen ausgeschnittenen Bereich umfasst, wobei die Ausführung der Programmanweisungen durch einen oder mehrere Prozessoren eines Computersystems bewirkt, dass der eine oder die mehreren Prozessoren die Schritte ausführen:
Umschalten eines Betriebszustands der Berührungsbildschirmvorrichtung von einem ersten Betriebszustand, der mit einer Multimedianutzung der Berührungsbildschirmvorrichtung im Zusammenhang steht, zu einem zweiten Betriebszustand, der mit einer Fahrfunktionalität des Fahrzeugs im Zusammenhang steht, wobei die Steuereinheit (12) der Berührungsbildschirmvorrichtung (10) dafür ausgelegt ist, den Betriebszustand der Berührungsbildschirmvorrichtung vom ersten Betriebszustand zum zweiten Betriebszustand umzuschalten, wobei die Bildschirmabdeckung über dem Anzeigebildschirm positioniert ist und das Fahrzeug (13) sich in einem autonomen Fahrmodus oder einem halbautomatischen Fahrmodus befindet; und
Auslösen eines Befehls der Fahrfunktionalität des Fahrzeugs basierend auf der Benutzereingabe, die über die wenigstens eine vordefinierte Fläche der Bildschirmabdeckung empfangen wird.

11. Computerlesbares Medium nach Anspruch 10, wobei die Fahrfunktionalität des Fahrzeugs einen Fahrbefehl, eine Routenauswahl und/oder eine das Fahrzeug betreffende Einstellung umfasst.

## Revendications

1. Véhicule (13) comprenant un dispositif à écran tactile opérationnel dual (10), le dispositif à écran tactile comprenant :
un écran d'affichage (10A) ;
une unité de commande (12) conçue pour commuter un état opérationnel du dispositif à écran tactile d'un premier mode opérationnel associé à une utilisation multimédia du dispositif à écran tactile à un second mode opérationnel associé à une fonctionnalité de conduite de véhicule,
**caractérisé en ce que** le dispositif à écran tactile (10) comprend en outre un couvercle d'écran (11, 23, 51) conçu pour couvrir au moins une partie de l'écran d'affichage (10A), le couvercle d'écran comprenant au moins une zone prédéfinie pour recevoir une entrée utilisateur,
l'unité de commande (12) étant en outre conçue pour déclencher une commande de la fonctionnalité de conduite de véhicule en fonction de l'entrée utilisateur reçue par l'intermédiaire de l'au moins une zone prédéfinie du couvercle d'écran,
l'au moins une zone prédéfinie comprenant au moins une région découpée (27), l'unité de commande (12) du dispositif à écran tactile (10) étant conçue pour commuter l'état opérationnel du dispositif à écran tactile du premier mode opérationnel au second mode opérationnel, lorsque le couvercle d'écran est positionné par-dessus l'écran et que le véhicule (13) est dans un mode de conduite autonome ou un mode de conduite semi-automatique.

2. Véhicule (13) selon la revendication 1, la fonctionnalité de conduite de véhicule comprenant une commande de conduite, une sélection d'itinéraire et/ou un réglage relatif au véhicule.

3. Véhicule (13) selon la revendication 1 ou 2, l'au moins une zone prédéfinie comprenant des marqueurs visuels et/ou tactiles définissant différentes entrées utilisateur possibles.

4. Véhicule (13) selon l'une quelconque des revendications 1 à 3, le couvercle d'écran comprenant, au moins en partie, un matériau transparent ou semi-transparent.

5. Véhicule (13) selon l'une quelconque des revendications 1 à 4, le dispositif à écran tactile (10) étant situé dans un tableau de bord, une console centrale ou un siège avant du véhicule (13).

6. Véhicule (13) selon l'une quelconque des revendications 1 à 5, le dispositif à écran tactile (10) étant conçu pour être fixé au véhicule (13) par l'intermédiaire d'un port d'accueil.

7. Véhicule (13) selon l'une quelconque des revendications 1 à 6, le dispositif à écran tactile (10) étant conçu pour fonctionner sans fil à l'intérieur du véhicule (13).

8. Procédé pour fournir un dispositif à écran tactile dans un véhicule (13), le dispositif à écran tactile comprenant un écran d'affichage et un couvercle d'écran conçu pour couvrir au moins une partie de l'écran d'affichage, le couvercle d'écran comprenant au moins une zone prédéfinie pour recevoir une entrée utilisateur, l'au moins une zone prédéfinie comprenant une région découpée, le procédé comprenant les étapes consistant à :
commuter un état opérationnel du dispositif à écran tactile d'un premier mode opérationnel associé à une utilisation multimédia du dispositif à écran tactile à un second mode opérationnel associé à une fonctionnalité de conduite de véhicule, l'unité de commande (12) du dispositif à écran tactile (10) étant conçue pour commuter l'état opérationnel du dispositif à écran tactile du premier mode opérationnel au second mode opérationnel, lorsque le couvercle d'écran est positionné par-dessus l'écran et le véhicule (13) est en mode de conduite autonome ou semi-automatique ; et
déclencher une commande de la fonctionnalité de conduite de véhicule en fonction de l'entrée utilisateur reçue par l'intermédiaire de l'au moins une zone prédéfinie du couvercle d'écran.

9. Procédé selon la revendication 8, la fonctionnalité de conduite de véhicule comprenant une commande de conduite, une sélection d'itinéraire et/ou un réglage relatif au véhicule.

10. Support lisible par ordinateur comprenant des instructions de programme pour fournir un dispositif à écran tactile dans un véhicule (13), le dispositif à écran tactile comprenant un écran d'affichage et un couvercle d'écran conçu pour couvrir au moins une partie de l'écran d'affichage, le couvercle d'écran comprenant au moins une zone prédéfinie pour recevoir une entrée utilisateur, l'au moins une zone prédéfinie comprenant une région découpée, l'exécution des instructions de programme par au moins un processeur d'un système informatique amenant l'au moins un processeur à effectuer les étapes consistant à :
commuter un état opérationnel du dispositif à écran tactile d'un premier mode opérationnel associé à une utilisation multimédia du dispositif à écran tactile à un second mode opérationnel associé à une fonctionnalité de conduite de véhicule, l'unité de commande (12) du dispositif à écran tactile (10) étant conçue pour commuter l'état opérationnel du dispositif à écran tactile du premier mode opérationnel au second mode opérationnel, lorsque le couvercle d'écran est positionné par-dessus l'écran et le véhicule (13) est en mode de conduite autonome ou semi-automatique ; et
déclencher une commande de la fonctionnalité de conduite de véhicule en fonction de l'entrée utilisateur reçue par l'intermédiaire de l'au moins une zone prédéfinie du couvercle d'écran.

11. Support lisible par ordinateur selon la revendication 10, la fonctionnalité de conduite de véhicule comprenant une commande de conduite, une sélection d'itinéraire et/ou un réglage relatif au véhicule.
